(19) Europäisches Patentamt
European Patent Office
Office européen des brevets

(11) EP 3 570 467 A1

(12) EUROPEAN PATENT APPLICATION

(43) Date of publication:
20.11.2019 Bulletin 2019/47

(51) Int Cl.:
H04J 11/00 (2006.01)    H04L 25/06 (2006.01)
H04L 27/26 (2006.01)    H04L 27/38 (2006.01)

(21) Application number: 18172990.6

(22) Date of filing: 17.05.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: FRAUNHOFER-GESELLSCHAFT zur
Förderung
der angewandten Forschung e.V.
80686 München (DE)

(72) Inventors:
• Speitel, Martin
92318 Neumarkt (DE)

• Langer, Thomas
91080 Uttenreuth (DE)
• Dettbarn, Thomas
90762 Fürth (DE)
• Fiermann, Christian
91052 Erlangen (DE)

(74) Representative: Pfitzner, Hannes et al
Schoppe, Zimmermann, Stöckeler
Zinkler, Schenk & Partner mbB
Patentanwälte
Radlkoferstraße 2
81373 München (DE)

(54) RECEIVER AND METHOD FOR REDUCING THE INFLUENCE OF NARROWBAND SPURS DURING AN OFDM SIGNAL RECEPTION

(57)    An OFDM receiver comprising a receiving path and a narrowband spur detector. The receiving path is configured to receive a signal comprising an expected signal portion and a payload portion. The spur detector is configured to analyze the expected signal portion in order to detect a narrowband interference overlapping the signal. The knowledge about the detected spurs is used to increase the receiver performance by weighting the Log Likelihood Ratio LLR accordingly.

Fig. 2

EP 3 570 467 A1

**Description**

Embodiments of the present invention refer to a receiver, e.g. a DAB (Digital Audio Broadcasting) or in general OFDM receiver and a method for receiving an OFDM signal (Orthogonal Frequency-Division Multiplexing). Further embodiments refer to a corresponding computer program.

Narrowband spurs are a problem for all kind of radio receivers. This becomes more and more relevant for digital radio receivers especially in a car environment. An OFDM system like DAB, DRM (Digital Radio Mondiale) and others are in principle designed for robustness against narrowband impairments. This could be narrowband noise or notches due to multipath effects.

Spurs are an inherent problem of any signal processing system. In analog systems, such as telephones or loudspeakers, they manifest in an audible hum or persistent high-pitch tone. In digital systems, such as digital radios, cell phones or WIFI, they produce an error floor of false bits. These can be filtered out through foward error correction (FEC), however, they impair performance.

According to the prior art, spurs can be compensated via careful pre-calibration and expensive shielding. In this context, the two patent applications US 2008/101212 A and KR 20100058931 A, both describing the problem of spurs in context of OFDM systems, should be mentioned.

An OFDM system using a mapping with only one amplitude value (e.g. 4-QAM, 4- Quadrature Amplitude Modulation) on each carrier, and no scattered pilot information (e.g. DAB), defines the reliability of an LLR value (Log Likelihood Ratio), typically by the signal power of its carrier. Thus, an in-band narrowband interferer, also referred to as "spur", with a high power on one frequency (carrier), produces a high reliability for the corresponding LLR value, even though the carrier is disputed significantly by the noise power from the spur. The consequence is that in the following stage, the forward error correction (FEC) misinterprets this high LLR reliability as a high reliability for a correctly received and remapped bit.

In case of a Viterbi decoder, this might mislead the error compensation of the following bits as well. Therefore, there is a need for an improved approach.

It is the objective of the present invention to provide an approach to improve the detection of spurs.

An embodiment provides the receiver comprising a receiving path and a spur detector. The receiving part is configured to receive a signal comprising an expected signal portion and a payload portion. The expected signal portion, may, for example, be a null symbol (time frame in which no signal power is broadcasted) typically included for synchronization purposes. The spur detector which may, for example, be arranged parallel to the receiving path or as bypass of the receiving path, is configured to analyze the expected signal portion in order to detect an interference, e.g. an in-band narrowband spur overlapping the signal. The knowledge about the detected spurs can be used to increase the receiver performance (by reducing the influence of (narrowband) spurs in an OFDM system).

Regarding the interference, it should be noted that the interference may be an in-band spur lying within the band of the signal and/or having a bandwidth which is smaller, e.g. two times or ten times or twenty times smaller than the band of the signal (payload signal).

Regarding the signal, it should be noted that the signal, the expected signal portion and the payload signal, is, for example, a signal on the time domain, where the expected signal portion is a certain time frame of the time signal. Thus, the position of the expected signal portion with respect to the payload signal within the signal is fixed. For example, the expected signal portion may be the typically broadcasted null symbol having synchronization purposes. This signal portion is preferred, since its energy level should amount to 0.

Embodiments of the present invention are based on the principle that certain systems, such as DAB, use an expected signal portion, for example null symbols for synchronization purposes. Those are extended stretches of time, where no power is being transmitted. The position within the waveform is fixed, thus, any power detected during that period must be stemming from spurs. Based on this knowledge, a receiver can be designed having a spur detection which analyzes this expected signal portion, or, in general signal portion having a known characteristic so as to detect the interference. This approach is advantageous, since the spur detector is configured to receive the same frequency band on the same carrier, for a time frame within which no signal should be present for the analyzed band/carrier, so that a spur line within the band/carrier can reliably be detected. As result, the proposed approach/method is tackling an inherent issue of any signal processing system, namely spurs, in the digital domain. This improves the overall performance of the system, e.g. of the digital radio standard, such as DAB, minimizing the need for expensive processes of calibration and shielding. Receivers, incurred with this method/approach can be brought to market much more swiftly and at lower costs. Moreover, the replacement of aging of electronic components which, typically affect spur patterns, does not require recalibration. This improves the long-lively of the overall system.

According to an embodiment, the receiving part comprises an FFT unit and a demapper. The FFT unit is configured to transform a time signal into a frequency domain, e.g. in order to separate different carries from each other. The carriers carrying the expected signal portion and the payload signal portion are transformed into the frequency domain. Consequently, the expected signal portion is available for each carrier separately so that interferences can be detected per carrier. Here, it should be noted that the receiving part may comprise an entity configured to instruct the expected signal portion and provide same to the spur detector according to further embodiments. The demapper is configured to demap data from the respective carriers. Additionally, the demapper may be configured to output an LLR value indicated for the reliability of the demapping or an LLR value per carrier indicated for the reliability of the demapping of the respective carrier. This LLR value is typically used by a forward error correction (FEC), e.g. being based on a Viterbi algorithm.

Analyzing the expected signal portion enables to gain information whether (within the relevant band or carrier) an interferer like spurs are present. Starting from this knowledge, the receiving part may comprise an additional entity which is configured to adapt the LLR value based on this knowledge. For example, in case of the presence of a spur, the LLR value for the carrier can be reduced. This is beneficial, since now, the LLR value is not any more misinterpreted as a result of a spur lying within the relevant band/carrier.

According to embodiments, the spur detector performs a power analysis of the expected signal portion. Background thereof is that the expected power in the expected signal portion may amount to 0, in case the expected portion is a null symbol. This has the consequence that in case of determining a signal power larger than 0, it can be assumed that an interferer/spur lies within the analyzed band/carrier. Therefore, the signal power of the expected signal portion may be compared to a threshold. According to embodiments, this threshold may be set dependent on the received signal. For example, the threshold may be a multiple of the average signal power of the entire signal or the entire signal of relevant band. Therefore, the threshold $p_{limit}$ is defined by $p_{limit}[n] = x\, p_{avrg}[n]$, with $x > 1$ and

$$p_{\text{avrg}}[n] = \frac{1}{k_{\text{used}}} \sum_{k=k_{\text{min}}}^{k_{\text{max}}} p_{\text{null}}[n, k]\,,$$

and

$$p_{\text{null}}[n, k] = \begin{cases} (1 - \alpha)\, p_{\text{null}}[n - 1, k] + \alpha \dfrac{|s_{\text{corr}}[n, k]|^2}{2} & \text{for } k_{\text{min}} \leq k < k_{\text{max}} \\ 0 & \text{for unused } k \end{cases}.$$

Starting from this calculation of the threshold, it should be noted that, according to embodiments, the LLR value may be adapted as follows:

$$LLR[n, k] = \begin{cases} f_{\text{LLR}}\left( c[n, k]\, \dfrac{p_{\text{avrg}}[n]}{p_{\text{null}}[n, k]} \right) & \text{if } p_{\text{null}}[n, k] > p_{\text{limit}}[n] \\ f_{\text{LLR}}(c[n, k]) & \text{if } p_{\text{null}}[n, k] \leq p_{\text{limit}}[n] \end{cases},$$

with

$$p_{\text{avrg}}[n] = \frac{1}{k_{\text{used}}} \sum_{k=k_{\text{min}}}^{k_{\text{max}}} p_{\text{null}}[n, k]\,,$$

and

$$p_{\text{null}}[n, k] = \begin{cases} (1 - \alpha)\, p_{\text{null}}[n - 1, k] + \alpha \dfrac{|s_{\text{corr}}[n, k]|^2}{2} & \text{for } k_{\text{min}} \leq k < k_{\text{max}} \\ 0 & \text{for unused } k \end{cases}$$

As discussed above, the usage of null symbols is typical for a DAB signal or special types of OFDM signals. Therefore, the receiver may be DAB or in general OFDM receiver. Consequently, the receiving path is according to embodiments configured to receive a DAB or in general OFDM signal.

A further embodiment provides a method for receiving a signal, e.g. a DAB service data (also referred to as Service Channel (SC), including a coded audio signal) or OFDM coded signal. The method comprising the steps of receiving the signal comprising an expected signal portion (e.g. the null symbol) and a payload portion. These two signal portions may be arranged in different time frames. The method further comprises the step of analyzing the expected signal portion in order to detect an interference (e.g. an in-band narrowband spur overlapping the signal). According to embodiments, this method may be implemented as computer program. Thus, an embodiment refers to a computer program having a program code for performing, when running on a computer, the method for receiving.

As discussed above, according to embodiments, the knowledge regarding the presence of interferences (spurs) is used to adapt the LLR value. According to another aspect, the interference situation can be detected differently, e.g. by use a modulation error rate. Thus, an embodiment provides a receiver having a receiving path configured to receive a signal comprising a payload portion, and a spur detector configured to analyze the receive signal in order to calculate a rating factor based on the interference analysis. Furthermore, the receiver comprises an entity for adapting/rating/scaling the LLR value.

This aspect is based on the principle that interferences may lead to incorrectly calculated LLR values, wherein analyzing means for detecting the interference situation enable to correct the LLR value. This approach is advantageous, since an adaption, e.g. adapting by weighting the LLR values enables to improve the forward error correction, consequently, the entire signal processing. According to embodiments, the spur detector performs the spur detection based on an expected signal portion (see above) or based on the calculation of a modulation error rate, or, based on another approach of detecting interferences within a signal.

Another embodiment provides a method for adapting the LLR value. The method comprises for the step of receiving a signal comprising a payload portion, analyzing the signal to detect an interference overlapping the signal, and adapting an LLR value indicative for the reliability of the receiving based on the detecting of the interferences. According to embodiments, the adapting may be performed by a rating or scaling.

Further developments are defined by the dependent claims. Embodiments of the present invention will subsequently be discussed referring to the enclosed figures, where:

Fig. 1a          shows a schematic block diagram of a receiver according to an embodiment;

Fig. 1b          shows a schematic flow chart illustrating the method for receiving a signal according to an embodiment;

Fig. 2           shows a schematic block diagram of a receiver according to a further embodiment;

Fig. 3a to 3c    show schematically three diagrams illustrating a receive signal including interferences and the separation of the interferences and the residual signal for illustrating embodiments of the present invention.

Before discussing the embodiments of the present invention in detail, it should be mentioned that identical reference numerals are provided to objects having a similar or identical function so that the description thereof is mutably applicable and interchangeable.

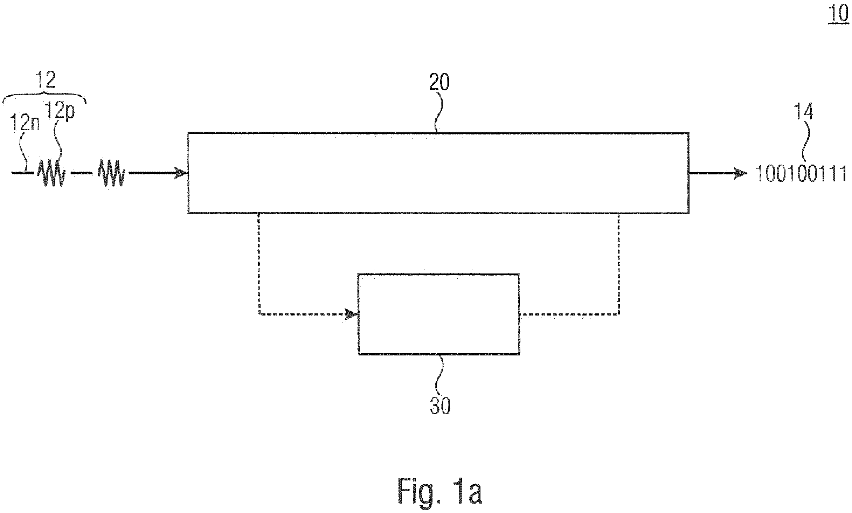

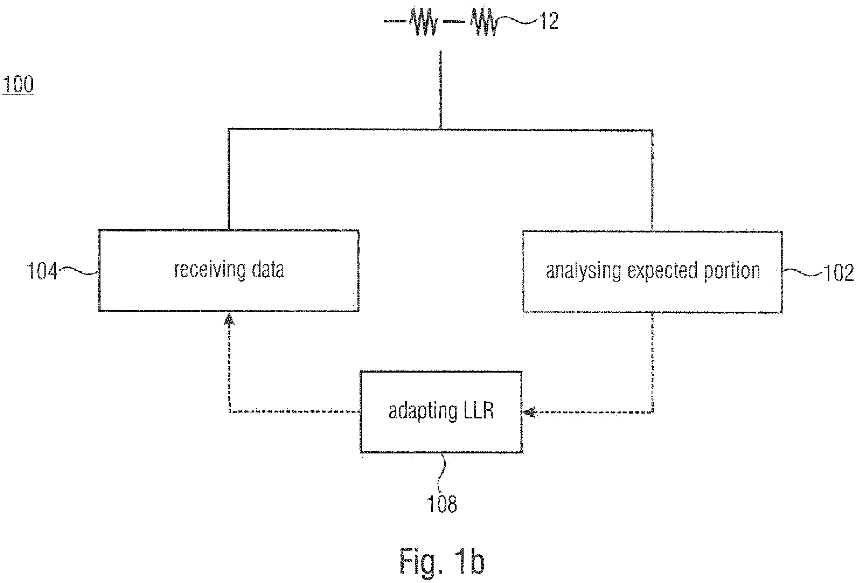

Fig. 1 shows a receiver 10 having a receiving path 20 and a spur detector 30. The receiving path is configured to receive a radio signal 12 (cf. schematically illustrated antenna), e.g. an OFDM signal. This signal is also provided to the spur detector 30, e.g. by bypass of the receiver 20 (or directly, not shown). The receiver 20 is configured to receive the signal 20 and to output a data stream, e.g. a bit stream 14, for example, this bit stream 14 may be processed by using FFT processing means, a demapper, and a forward error correction. Especially for the forward error correction, it is necessary that information regarding the reliability of the performed demapping is available. As discussed above, the used value is the so-called LLR value, wherein this value may be misinterpreted.

In order to avoid this misinterpretation or, in general, in order to improve the estimation of the reliability/quality of a received signal, the spur detector 30 analyzes the signal 12.

The signal 12, may, for example, be a signal in the time domain having a known signal portion 12n and a payload portion 12p. These two signal portions 12n and 12p may be arranged in different subsequent time frames. For example, the known signal portion may be broadcast and, thus, received every transmission frame (e.g. every 96ms) on general or regular period between two payload portions. The known signal portion may, for example, be a null symbol or other known signal, like a reference symbol or pilots, etc. The spur detector 30 receives at least a known signal portion 12n, e.g. extracted from the entire signal 12 and analyzes same. Since the spur detector 30 has certain expectations, the received signal of a received portion 12n can be compared with the expectations. A mismatch between the expectations and the received signal belonging to the expected signal portion is indicated for interferences overlapping the expected signal portion. Based on the assumption that typically, an interference overlapping the expected signal portion also overlaps the payload portion, an estimation of the interference situation for the payload portion can be made. In case an expected signal portion is a null symbol, the expectation regarding this portion is that the received signal has an energy level of 0. Thus, a received signal corresponding to the expected signal portion having an energy level larger or significantly larger than 0 indicates an interferer. Since the expected signal portion is, according to embodiments, extracted from the receive path, e.g. after performing the FFT, the expected signal portion analyzed by the spur detector represents only the relevant frequency band/carrier. As a result, the detector 30 enables to detect an in-band spur. Due to the fact that within the expected signal portions no energy should be received over the entire analyzed band, the signal power larger than 0 also indicates a narrowband spur. The information regarding in-band narrowband spurs can be used to improve the forward error correction or to process the payload portion in order to improve the receiving quality.

Since often such a receiver is, at least, partially implemented as software entity, the method which is performed by a processor based on instructions included by the program code, will be discussed with respective Fig. 1b.

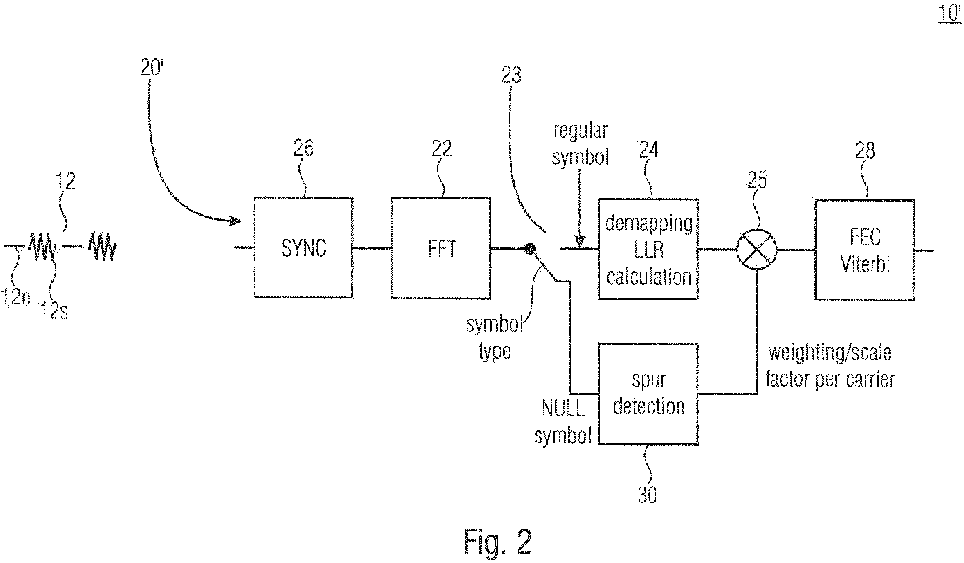

Fig. 1b shows the method 100 having two basic steps, namely the basic step of receiving the signal 102 and analyzing the expected signal portion 104. The step 102 of receiving the signal, may, be partially implemented in hardware or software. It becomes clearer, when considering that an OFDM system typically uses a FFT processing and a demapping algorithm. Both processing steps can be performed by means of a CPU. From another point of view, this means that the step 102 may comprise sub-steps of FFT transformation and demapping. Additionally, the step 102 may optionally comprise the step of calculating the LLR value. In parallel or subsequently to the step 102 of receiving, the expected signal portion 12n is analyzed (cf. step 104). This step 104 may comprise optional sub-steps of performing power analysis and comparing the current signal power of the expected signal portion 12n with a threshold. A detailed description will be given with respect to Fig. 2.

According to further embodiments, the method 100 comprises an optional step 108 of adapting the LLR value based on the result of the step 102. Preferably, the LLR value is reduced when an interferer has been detected during the step 102 or remains non-amended in case of no interference has been detected.

As discussed, the detection of interferences is preferably based on the analysis of an expected signal portion, e.g. of the null symbol or a gap between two payload portions.

However, according to a further aspect of the invention, the interference situation may be estimated differently. For example, the MER value (Modulation Error Rate) can be used to adapt (per carrier) the LLR value. Thus, according to an embodiment, the method may comprise just the steps 104 and 108 as well as an additional step of performing a method for estimating the interference situation, e.g. by calculating the MER value (Modulation Error Rate) per carrier. This approach is beneficial when there is no null symbol /known portion present in the system (enabling a good distinction from the disturbance power).

Fig. 2 shows another receiver 10' comprising a receiving path 20' and a spur detector 30.

The receiving path 20' comprises at least an FFT (Fast Fourier Transformation) entity 22 and a demapper 24. The FFT entity 22 transforms the receive signal from the time domain into the frequency domain. This enables to separate different carriers from each other. The signal output of the FFT entity 22 is provided to the demapper 24 which demaps the transformed signal so as to output a bit stream based on the signal. During this demapping, typically, the LLR values indicative for the reliability of the output bits/bit stream may be calculated by the demapper 24. Additionally, the receive path 20' may comprise at its input a synchronization entity 26 configured to synchronize the FFT entity 22 with the receive signal. Here, the synchronization may be performed based from detecting the respective signal portion 12n, such that the FFT entity 22 performs the transformation on the correct time frame, namely the time frame belonging to the signal portion 12p, wherein this signal portion may be subdivided into a plurality of time frames. Additionally, the receiving path 20' may comprise a forward error correction 28 configured to use redundancy within the receive signal in order to correct receive errors/mapping errors. The forward error correction unit 28 may, for example, be configured to perform the Viterbi algorithm. In order to improve this forward error correction efficiency FEC unit 28 uses the LLR values (calculated by the demapper 24) to determine which of the received bits may be incorrectly mapped. Between the demapper 24 and the FEC unit 28 a interleaver may be arranged.

In parallel to the receiving path 20', the spur detector 30 is arranged. The spur detector 30 that may, for example, get the signal to be analyzed (especially the expected signal portion 12n) from the FFT unit 22 or, an entity arranged at the output of the FFT unit 22. This entity is marked by the reference numeral 23 and configured to forward the regular symbols belonging to the payload portion 12p to the demapper 24 and the expected signal portion 12n (null symbol) to the spur detector 30 selectively, i.e. that the entity 23 is configured to selectively distribute the receive signal (the receive signal in the frequency domain) dependent on the respective symbol type. I.e. that the providing of the null symbol/expected signal portion to the spur detector 30 may be performed in that manner that a plurality of portions corresponding to a plurality of carriers are forwarded.

Below, according to an embodiment, a spur detection algorithm will be discussed representing a preferred variant. Here, the assumption is made that the receiving path 20' is a receiving path of a DAB system or another comparable system using null symbols for synchronization purposes. The null symbol can be described as extended stretches of time, where no power is being transmitted. The position (e.g. 96ms in case of DAB Transmission Mode I or to a certain time having a constant repeating period) within the waveform is fixed. Thus, any power detected during the period must be stemming from spurs (in general interferences).

Generally speaking, the disturbance power per carrier can - according to embodiments - be detected during the null symbol duration in the digital domain. If the disturbance power per carrier exceeds a threshold, the reliability of the LLR value is scaled down by the inverse factor of the detected disturbance strength. This way, the misleading high LLR reliability values of disturbed carriers are avoided. The knowledge that the LLR value should not be interpreted as reliable, due to the fact that the corresponding carrier was disturbed (e.g. by a spur), improves the performance of the FEC algorithm. The algorithm may perform the following steps:

- Apply frequency shift to and scale (according to the current AGC setting) the null symbol (for DAB the ones without TII information) the same way as it was done for the data symbols during the previous transmission frame

- Transform the scaled null symbol to frequency domain (FFT algorithm)

- Apply carrier phase shift to the null symbol to compensate symbol position changes the same way as it was done for the data symbols during the previous transmission frame

- Measure the signal power $p_{null}[n,k]$ per used carrier k in the range of $k_{min}$ ... $k_{max}$ of that corrected (frequency shifted, scaled, transformed, and phase shifted) null symbol $s_{corr}[n,k]$ and average those values per transmission frame over time n

$$p_{null}[n,k] = \begin{cases} (1-\alpha)\, p_{null}[n-1,k] + \alpha \dfrac{|s_{corr}[n,k]|^2}{2} & \text{for } k_{min} \le k < k_{max} \\ 0 & \text{for unused } k \end{cases}$$

- Calculate the average signal power of all used carriers k in the range of $k_{min}$ ... $k_{max}$ of the current null symbol (no average over time) and scale up this value (e.g. by factor 4) for a threshold limit $p_{limit}[n]$

$$p_{avrg}[n] = \frac{1}{k_{used}} \sum_{k=k_{min}}^{k_{max}} p_{null}[n,k] \quad \text{and} \quad p_{limit}[n] = 4\, p_{avrg}[n]$$

- Check if the time averaged signal power $p_{null}[n,k]$ per carrier k is above that threshold in the current null symbol.

According to embodiments, this information regarding the presence of a spur in the relevant carrier can be used to adapt the LLR values indicative for the reliability of the mapping. For this, the receive path 20' may, for example, comprise a rating entity 25 and an output of the demapper 24 enabling to apply a rating/scaling factor (per carrier) to the respective LLR values so that the FEC unit 26 gets a corrected LLR value. The adaption may be done as following: In case $p_{null}$ is above the threshold: Use the average signal power $p_{avrg}[n]$ of all used carriers of the current null symbol divided by the time averaged signal power $p_{null}$ of this individual carrier k as down scaling factor for the LLR value derived by function $f_{LLR}(...)$ from the data cells c[n,k] at this frequency position (carrier number) during the upcoming transmission frame.

In case $p_{null}$ is below the threshold, the LLR value derived from the data source c[n,k] at this frequency position (carrier number) during the upcoming transmission frame is not changed.

$$LLR[n,k] = \begin{cases} f_{LLR}\left(c[n,k] \dfrac{p_{avrg}[n]}{p_{null}[n,k]}\right) & \text{if } p_{null}[n,k] > p_{limit}[n] \\ f_{LLR}(c[n,k]) & \text{if } p_{null}[n,k] \le p_{limit}[n] \end{cases}$$

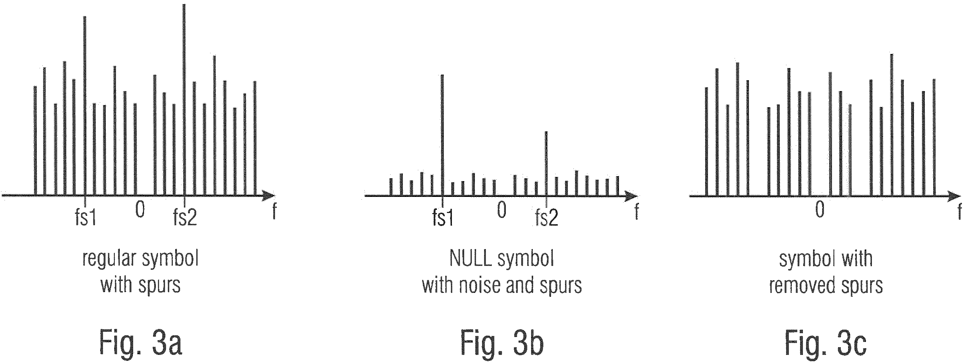

Alternatively, to the approach of adapting the LLR value, the spurs/interferences can be removed from the signal, especially from the payload portion, as will be discussed with respect to Fig. 3a, b, and c.

Fig. 3a shows a receive signal plotted over the frequency including all interferences, i.e. the regular symbol belonging to the payload portion overlapped by spur interferences.

Document 3b illustrates the interferences/noise and spurs detected by analyzing the expected signal portion, hereby analyzing the null symbol. From a theoretical point of view, the power level for each frequency of the null symbol should amount to 0. However, due to noise, the theoretically expected signal is slightly interfered over the entire relevant frequency band. Furthermore, due to spurs at the frequencies FS1, FS2, some frequencies are significantly interfered. When comparing the diagram of Fig. 3b with the diagram of Fig. 3a, it becomes clear that the high power level at the corresponding frequencies FS1, FS2 within the payload portion result from the two detected spurs. Background thereof is that the naturally occurring spurs are distributing each received symbol equally so that the detected spurs in the special symbol, the null symbol, can be removed from other symbols.

Based on this knowledge, the payload portion signal can be corrected by subtracting the interference spectrum (cf. Fig. 3b) from the payload spectrum (cf. Fig. 3a) to obtain the symbols with removed spurs (Fig. 3c). It should be noted that typically, the spur reduction is performed per carrier.

Based on this approach, the receive quality can be improved.

Although, the main application is DAB audio systems, other broadcasting or OFDM systems not using a regularly broadcasted null symbol (with no signal power inside) can be used in this described approach, too. In case there is no regularly scheduled time interval without signal transmission, a similar algorithm can be used for gaps between two signal transmissions/payload portions. Within these gaps, the expected signal portion has an expected signal power of 0 so that the spur detection by measuring the signal power can be applied to this irregularly arranged signal portion.

Additionally, it should be noted that according to further embodiments, the spur detector can use the modulation error rate (MER) per carrier. This modulation error rate can be used to scale the reliability of the corresponding LLR value. This enables that if there is no possibility to a distinguished signal from disturbance power (in case if there is no null symbol present in the system) to adapt/correct the LLR value, too. Therefore, according to embodiments, the adaption of the LLR value may be based on another spur detection/interference detection approach.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

The inventive encoded data (or audio) signal can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. A receiver (10, 10') for an OFDM system, comprising:

   a receiving path (20, 20') configured to receive a signal comprising an expected signal portion (12n) and a payload portion (12p); and
   a spur detector (30) configured to analyze the expected signal portion (12n) in order to detect an interference overlapping the signal.

2. The receiver (10, 10') according to claim 1, wherein the interference is a spur lying within the band of the signal; and/or wherein the interference has a bandwidth which is smaller than the band of the signal or ten times smaller than the band of the signal.

3. The receiver (10, 10') according to one of the previous claims, wherein the signal is a signal on the time domain and the expected signal portion (12n) is a certain time frame of the signal or wherein the position of the expected signal portion (12n) with respect to the payload signal within the signal is fixed.

4. The receiver (10, 10') according to one of the previous claims, wherein the expected signal portion (12n) comprises a null symbol and/or a portion to be used for synchronizing purpose.

5. The receiver (10, 10') according to one of the previous claims, wherein the receiving path (20, 20') comprises:

   an FFT unit (22) configured to transform a time signal into the frequency domain in order to separate different carriers; and
   a demapper (24) configured to demap data from the respective carriers.

6. The receiver (10, 10') according to claim 5, wherein the demapper (24) is configured to calculate and output an LLR value indicative for the reliability of the demapping and/or an LLR value per carrier indicative for the reliability of the demapping of the respective carrier.

7. The receiver (10, 10') according to one of the previous claims, wherein the receiving path (20, 20') comprises an extraction entity (23) configured to extract the expected signal portion (12n) from the payload portion (12p) and to forward the expected signal portion (12n) to the spur detector (30).

8. The receiver (10, 10') according to one of the previous claims, wherein the spur detector (30) is configured to analyze the expected signal portion (12n) for the respective carriers separately.

9. The receiver (10, 10') according to one of the previous claims, wherein the spur detector (30) is configured to analyze the expected signal portion (12n) by determining a signal power of the expected signal portion (12n).

10. The receiver (10, 10') according to claim 9, wherein the analysis is performed by comparing the determined signal power of the expected signal portion (12n) with a threshold.

11. The receiver (10, 10') according to claim 10, wherein the threshold is dependent from an average power of the signal or of a respective carrier of the signal.

12. The receiver (10, 10') according to claim 10 or 11, wherein the threshold $p_{limit}[n]$ is defined by

$$p_{\text{limit}}[n] = x\, p_{\text{avrg}}[n],$$

where x > land where

$$p_{\text{avrg}}[n] = \frac{1}{k_{\text{used}}} \sum_{k=k_{\text{min}}}^{k_{\text{max}}} p_{\text{null}}[n, k]$$

with

$$p_{\text{null}}[n, k] = \begin{cases} (1 - \alpha)\, p_{\text{null}}[n - 1, k] + \alpha \dfrac{|s_{\text{corr}}[n, k]|^2}{2} & \text{for } k_{\text{min}} \le k < k_{\text{max}} \\ 0 & \text{for unused } k \end{cases}$$

13. The receiver (10, 10') according to one of the claims 6 to 12, wherein the receiver (10, 10') comprises an LLR-value-adapter (25) configured to adapt the LLR value dependent on the presence of interferences detected by the spur detector (30); and/or
wherein the receiver (10, 10') comprises an LLR-value-adapter (25) configured to reduce the LLR value when the presence of an interference is detected by use of the spur detector (30).

14. The receiver (10, 10') according to claim 13, wherein the adaption of the LLR value is performed based on the following formula:

$$LLR[n, k] = \begin{cases} f_{\text{LLR}}\left( c[n, k]\, \dfrac{p_{\text{avrg}}[n]}{p_{\text{null}}[n, k]} \right) & \text{if } p_{\text{null}}[n, k] > p_{\text{limit}}[n] \\ f_{\text{LLR}}(c[n, k]) & \text{if } p_{\text{null}}[n, k] \le p_{\text{limit}}[n] \end{cases}$$

wherein $p_{\text{limit}}[n] = x\, p_{\text{avrg}}[n]$,
where x >1, where

$$p_{\text{avrg}}[n] = \frac{1}{k_{\text{used}}} \sum_{k=k_{\text{min}}}^{k_{\text{max}}} p_{\text{null}}[n, k]$$

where

$$p_{\text{null}}[n, k] = \begin{cases} (1 - \alpha)\, p_{\text{null}}[n - 1, k] + \alpha \dfrac{|s_{\text{corr}}[n, k]|^2}{2} & \text{for } k_{\text{min}} \le k < k_{\text{max}} \\ 0 & \text{for unused } k \end{cases}$$

15. The receiver (10, 10') according to one of the claims 6 to 14, wherein the receiver (10, 10') comprises means for forward an error correcting unit (28) configured to perform a forward error correction based on a received and/or adapted LLR value.

16. The receiver (10, 10') according to one of the previous claims, wherein the receiving path (20, 20') is configured to receive DAB service data and/or OFDM coded data.

17. A receiver (10, 10'), comprising:

a receiving path (20, 20') configured to receive a signal comprising a payload portion (12p);

a spur detector (30) configured to analyze the signal in order to detect an interference overlapping the signal; an LLR-value-adapter (25) configured to adapt an LLR value dependent on the presence of interferences detected by the spur detector (30).

18. The receiver (10, 10') according to claim 17; wherein the spur detector (30) is configured to analyze an expected signal portion (12n) of the signal in order to detect an interference overlapping the signal or is configured to calculate a modulation error rate indicative for interferences.

19. A method (100) for receiving (104) a signal, comprising:

Receiving (104) the signal comprising an expected signal portion (12n) and a payload portion (12p); and analyzing (102) the expected signal portion (12n) in order to detect an interference overlapping the signal.

20. A method (100) for receiving (104) a signal, comprising:

receiving (104) the signal comprising a payload portion (12p); analyzing (102) the signal in order to detect an interference overlapping the signal; and adapting (108) an LLR value dependent on the presence of interferences.

21. A computer program having a program code for performing, when running on a computer, the method (100) according to claims 19 or 20.

EP 3 570 467 A1

Fig. 1a

Fig. 1b

Fig. 2

regular symbol
with spurs

Fig. 3a

NULL symbol
with noise and spurs

Fig. 3b

symbol with
removed spurs

Fig. 3c

EP 3 570 467 A1

Europäisches
Patentamt

European
Patent Office

Office européen
des brevets

# EUROPEAN SEARCH REPORT

Application Number

EP 18 17 2990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KALYANI S ET AL: "Narrowband Interference Mitigation in Turbo-Coded OFDM Systems", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 1059-1064, XP031125813, ISBN: 978-1-4244-0353-0 * Sections II. and IV. * | 1-21 | INV. H04J11/00 H04L25/06 H04L27/26 H04L27/38 |
| X | MICHELE MORELLI ET AL: "Improved Decoding of BICM-OFDM Transmissions Plagued by Narrowband Interference", IEEE TRANSACTIONS ON WIRELESS COMMUNICATIONS, IEEE SERVICE CENTER, PISCATAWAY, NJ, US, vol. 10, no. 1, 1 January 2011 (2011-01-01), pages 20-26, XP011342033, ISSN: 1536-1276, DOI: 10.1109/TWC.2010.110510.091535 * Sections II. and III. * | 1-21 | |
| X | WO 2016/126179 A1 (ERICSSON TELEFON AB L M [SE]) 11 August 2016 (2016-08-11) * figure 4 * * page 11, line 1 - line 16 * * page 16, line 20 - page 17, line 12 * | 1-21 | TECHNICAL FIELDS SEARCHED (IPC) H04J H04L |

-/--

The present search report has been drawn up for all claims

| Place of search | Date of completion of the search | Examiner |
|---|---|---|
| Berlin | 13 November 2018 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 17 2990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHNELL M ET AL: "Interference mitigation for broadband L-DACS", DIGITAL AVIONICS SYSTEMS CONFERENCE, 2008. DASC 2008. IEEE/AIAA 27TH, IEEE, PISCATAWAY, NJ, USA, 26 October 2008 (2008-10-26), pages 2.B.2-1, XP031372558, ISBN: 978-1-4244-2207-4 * Section "Interference Mitigation by Pulse Blanking or Clipping" * * page 9, column 1 * | 20 | |
| A | HSU-FENG HSIAO ET AL: "Narrow-band interference rejection in OFDM-CDMA transmission system", CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, vol. 4, 31 May 1998 (1998-05-31), pages 437-440, XP010289540, DOI: 10.1109/ISCAS.1998.698918 ISBN: 978-0-7803-4455-6 * Section 2.; figure 4 * | 1-21 | |
| A | LIN NA ET AL: "Iterative impulse noise and large scale single frequency noise mitigation for underwater acoustic OFDM", APPLIED ACOUSTICS, vol. 118, 9 December 2016 (2016-12-09), pages 76-82, XP029853328, ISSN: 0003-682X, DOI: 10.1016/J.APACOUST.2016.11.017 * Section 3. * | 1-21 | |

TECHNICAL FIELDS SEARCHED (IPC)

-/--

The present search report has been drawn up for all claims

| Place of search | Date of completion of the search | Examiner |
|---|---|---|
| Berlin | 13 November 2018 | Chave, Julien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

# EUROPEAN SEARCH REPORT

Application Number

EP 18 17 2990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 644 404 B2 (NIPPON TELEGRAPH & TELEPHONE) 4 February 2014 (2014-02-04) * column 2, line 24 - line 39 * ----- | 1-21 | |

TECHNICAL FIELDS
SEARCHED      (IPC)

The present search report has been drawn up for all claims

| Place of search | Date of completion of the search | Examiner |
|---|---|---|
| Berlin | 13 November 2018 | Chave, Julien |

EPO FORM 1503 03.82 (P04C01)

## ANNEX TO THE EUROPEAN SEARCH REPORT
## ON EUROPEAN PATENT APPLICATION NO.

EP 18 17 2990

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2018

| Patent document cited in search report | | | Publication date | Patent family member(s) | | | Publication date |
|---|---|---|---|---|---|---|---|
| WO 2016126179 | A1 | | 11-08-2016 | CN | 107210979 | A | 26-09-2017 |
| | | | | EP | 3254422 | A1 | 13-12-2017 |
| | | | | US | 2018020458 | A1 | 18-01-2018 |
| | | | | WO | 2016126179 | A1 | 11-08-2016 |
| US 8644404 | B2 | | 04-02-2014 | CN | 102246444 | A | 16-11-2011 |
| | | | | EP | 2348655 | A1 | 27-07-2011 |
| | | | | EP | 2863563 | A1 | 22-04-2015 |
| | | | | JP | 5399412 | B2 | 29-01-2014 |
| | | | | JP | 5634582 | B2 | 03-12-2014 |
| | | | | JP | 2014053904 | A | 20-03-2014 |
| | | | | JP | WO2010070925 | A1 | 24-05-2012 |
| | | | | KR | 20110088557 | A | 03-08-2011 |
| | | | | KR | 20130093690 | A | 22-08-2013 |
| | | | | US | 2011243268 | A1 | 06-10-2011 |
| | | | | WO | 2010070925 | A1 | 24-06-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008101212 A

- KR 20100058931 A